# EUROPÄISCHE PATENTSCHRIFT

(11) **EP 1 810 112 B1**
(45) Veröffentlichungstag und Bekanntmachung des Hinweises auf die Patenterteilung: **19.10.2011**
(21) Anmeldenummer: 05785661.9
(22) Anmeldetag: 21.09.2005
(51) Int. Cl.: G06F 1/00, G07F 7/10

(54) **VERFAHREN UND ANLAGE ZUR BENUTZERSPEZIFISCHEN INITIALISIERUNG VON IDENTIFIKATIONSGERÄTEN IM FELD**
METHOD AND SYSTEM FOR THE USER-SPECIFIC INITIALIZATION OF IDENTIFICATION DEVICES IN THE FIELD
PROCEDE ET INSTALLATION D'INITIALISATION PROPRE A L'UTILISATEUR, DE DISPOSITIFS D'IDENTIFICATION SUR PLACE

(30) Priorität: 09.11.2004 AT 18652004
(43) Veröffentlichungstag der Anmeldung: 25.07.2007
(73) Patentinhaber: Kapsch TrafficCom AG, 1121 Wien (AT)
(72) Erfinder: EBERSTALLER, Bernd, A-3032 Eichgraben (AT)
(74) Vertreter: Weiser, Andreas
(86) Internationale Anmeldenummer: PCT/AT2005/000378
(87) Internationale Veröffentlichungsnummer: WO 2006/050543

(56) Entgegenhaltungen:
- EP-A- 0 730 253
- WO-A-01/67402
- DE-A1- 3 927 270
- US-A- 4 650 975

## Beschreibung

Die Erfindung betrifft ein Verfahren gemäß dem Oberbegriff des Anspruchs 1 und eine Anlage gemäß dem Oberbegriff des Anspruchs 20.

Bei Identifikations-, Autorisierungs-, Ausweis- und Verrechnungssystemen mit einer Zentrale und dezentralen mobilen Identifikationsgeräten werden die Identifikationsgeräte üblicherweise ohne Zuordnung zu einer Benutzeridentifikation hergestellt und erst bei der Ausgabe mit der jeweiligen Benutzeridentifikation initialisiert und an den Benutzer übergeben. Die Initialisierung erfolgt dabei entweder an dezentralen oder zentralen Initialisierungsstationen.

Aus der EP 0 730 253 A2 ist es bekannt, mit Geräteidentifikationen versehene Schlüsselträger anonymisiert auszuliefern und vom Benutzer an eine Zentrale schriftlich empfangsbestätigen zu lassen, welche dann die Benutzer/Schlüssel-Zuordnungen für Public/Private-Key-Abfragen verwaltet.

Der Nachteil der herkömmlichen Lösungen ist, daß entweder aufwendige manuelle Schritte erforderlich sind, oder an vielen Ausgabeorten Initialisierungsstationen mit einer Datenverbindung zu der zentralen Einrichtung errichtet werden müssen, oder daß eine aufwendige Logistik zur Verteilung der initialisierten Identifikationsgeräte an den richtigen Benutzer notwendig ist.

Die Aufgabe der Erfindung ist es, eine sichere Personalisierung bzw. benutzerspezifische Initialisierung eines Identifikationsgerätes ohne kostspielige manuelle Schritte, dezentrale Initialisierungsstationen und ohne den hohen logistischen Aufwand der Verteilung bereits initialisierter Identifikationsgeräte durchführen zu können.

Diese Aufgabe wird in einem ersten Aspekt der Erfindung mit einem Verfahren der einleitend genannten Art erreicht, das sich durch die kennzeichnenden Merkmale des Anspruchs 1 auszeichnet, und in einem zweiten Aspekt der Erfindung durch eine Anlage der eingangs genannte Art, die sich durch die kennzeichnenden Merkmale des Anspruchs 20 auszeichnet.

Auf diese Weise kann ein Identifikationsgerät mit einer beliebigen Geräteidentifikation an den Benutzer ausgeliefert und von diesem vor Ort mittels des Initialisierungs-PIN personalisiert werden. Mit Hilfe des Initialisierungs-PIN wird verifiziert, ob die Zuordnung der eigenen Geräteidentifikation des Identifikationsgerätes mit der im Initialisierungs-PIN übermittelten Information über die Geräteidentifikation übereinstimmt. Bei Übereinstimmung wird aus dem Initialisierungs-PIN die Benutzeridentifikation errechnet und diese wird am Identifikationsgerät angezeigt. Damit ist der Initialisierungsvorgang des Identifikationsgerätes abgeschlossen und z.B. ein Datenaustausch zwischen dem Identifikationsgerät und der zentralen Einrichtung freigegeben. Durch die Übermittlung des Initialisierungs-PINs sind keine aufwendigen Initialisierungsstationen zur Initialisierung der Identifikationsgeräte notwendig.

In einer bevorzugten Ausführungsform des erfindungsgemäßen Verfahrens wird zum Zurücksetzen des Identifikationsgerätes in den Auslieferzustand ein Deinitialisierungs-PIN generiert, der wie der Initialisierungs-PIN gehandhabt wird. Nach dem Deinitialisieren ist das Identifikationsgerät wieder bereit für eine neuerliche Initialisierung.

In einer weiteren Ausführung kann die Geräteidentifikation des Identifikationsgerätes aus einem öffentlichen Teil und einem privaten (geheimen) Teil bestehen. Der öffentliche Teil der Geräteidentifikation wird bei der Fertigung festgelegt und sowohl auf das Gehäuse des Identifikationsgeräte gedruckt als auch im Identifikationsgerät gespeichert. Der private Teil der Geräteidentifikation wird auch bei der Fertigung festgelegt und im Identifikationsgerät gespeichert. Der private Teil der Geräteidentifikation kann eine Zufallszahl oder eine nach einem bestimmten Algorithmus berechnete Zahl sein. Der öffentliche und der private Teil der Geräteidentifikation werden der zentralen Einrichtung vor Auslieferung bekanntgegeben.

In weiterer Ausbildung der Erfindung ist vorgesehen, daß aus Sicherheitsgründen bei der Generierung des Initialisierungs-PIN bzw. Deinitialisierungs-PIN ein Verschlüsselungsverfahren angewendet wird, und im Identifikationsgerät wird der Initialisierungs-PIN bzw. Deinitialisierungs-PIN entsprechend entschlüsselt.

Der Initialisierungs-PIN oder Deinitialisierungs-PIN kann dem Benutzer mitgeteilt und von diesem manuell mittels einer Tastatur am Identifikationsgerät eingegeben; alternativ kann er von der Zentrale, z.B. über eine Funkschnittstelle zum Identifikationsgerät, übermittelt werden.

Eine weitere Ausführung der Erfindung ist, daß das erfindungsgemäße Verfahren in der automatischen Registrierung der Fahrtstrecken oder Fahrtrouten von Fahrzeugen eingesetzt wird, um daraus Mautgebühren zu berechnen und verkehrstelematische Daten zur Analyse der Verkehrsströme zu generieren. Dabei wird jedem Fahrzeug ein Fahrzeuggerät (Onboard-Unit, OBU) zugeordnet, das über eine Geräteidentifikation und eine zugeordnete Benutzeridentifikation, z.B. Kfz-Kennzeichen, verfügt. Diese Fahrzeuggeräte werden an verteilten Vertriebsstellen z.B. Tankstellen, Zollämtern, Häfen usw., ausgegeben, und dem Benutzer wird nach dem erfindungsgemäßen Verfahren der Initialisierungs-PIN mitgeteilt. Nach der Eingabe des Initialisierungs-PIN in das Identifikationsgerät ist dieses bereit, die Fahrtstrecken sowie die verkehrstelematischen Daten zu registrieren und an die zentrale Einrichtung zu übermitteln. Der Initialisierungs-PIN kann auch von der zentralen Einrichtung an das Identifikationsgerät gesendet werden und die Initialisierung erfolgt entweder vollautomatisch oder halbautomatisch. Bei der automatischen Initialisierung wird dem Benutzer angezeigt, daß die Initialisierung erfolgt ist. Bei der halbautomatischen Initialisierung wird die Benutzeridentifikation angezeigt, und es müssen die Initialisierung und die Benutzeridentifikation vom Benutzer quittiert werden.

Gemäß einer weiteren Variante der Erfindung kann nach der Initialisierung das Identifikationsgerät deaktiviert und wieder aktiviert werden, z.B. wenn das mautpflichtige Fahrzeug die mautpflichtige Region verläßt. Nach der Deaktivierung bleiben alle Daten der Initialisierung im Identifikationsgerät erhalten, jedoch wird die Aufzeichnung der Fahrtstrecke und der verkehrstelematischen Daten unterbrochen. Die Aktivierung und Deaktivierung kann wie bei der Initialisierung manuell, halbautomatisch oder automatisch mittels eines Aktivierungs-PINs bzw. Deaktivierungs-PIN erfolgen.

Ein weiteres Merkmal der Erfindung besteht darin, daß in dem Initialisierungs-PIN auch benutzerspezifische, funktionale Berechtigungen und Daten enthalten sind, wie z.B. Schadstoffklasse des Fahrzeugs, Achsanzahl oder höchstzulässiges Gesamtgewicht. Die benutzerspezifischen Berechtigungen und Daten können im Identifikationsgerät ferner mittels eines Berechtigungs-PINs geändert werden.

Das Identifikationsgerät sendet nach der Initialisierung Daten an die zentrale Einrichtung und der Empfang der Daten wird mit einem Quittierungs-PIN bestätigt.

Die Generierung des Aktivierungs-PINs, Deaktivierungs-PINs, Berechtigungs-PINs bzw. Quittierungs-PINs erfolgt nach dem erfindungsgemäßen Verfahren wie bei der Initialisierung.

In einer weiteren Ausbildung der Erfindung kann die abschnittsweise Funkverbindung zwischen dem mobilen Identifikationsgerät und einer stationären Funkstation ein Mikrowellen-Funkkanal; Dedicated Short Range Communication (DSRC); ein Funkkanal oder ein Mobilfunkkanal, z.B. GSM, UMTS oder eine Wireless-Datenverbindung, z.B. WLAN, WiMAX, sein.

Die Beschreibung eines Ausführungsbeispiels des Verfahrens und der Anlage der Erfindung erfolgt anhand der folgenden Figuren:
Fig. 1: schematischer Aufbau des Systems
Fig. 2: schematischer Ablauf der Initialisierung
Fig. 3: Ablaufdiagramm der PIN-Generierung
Fig. 4: schematischer Ablauf der Aktivierung

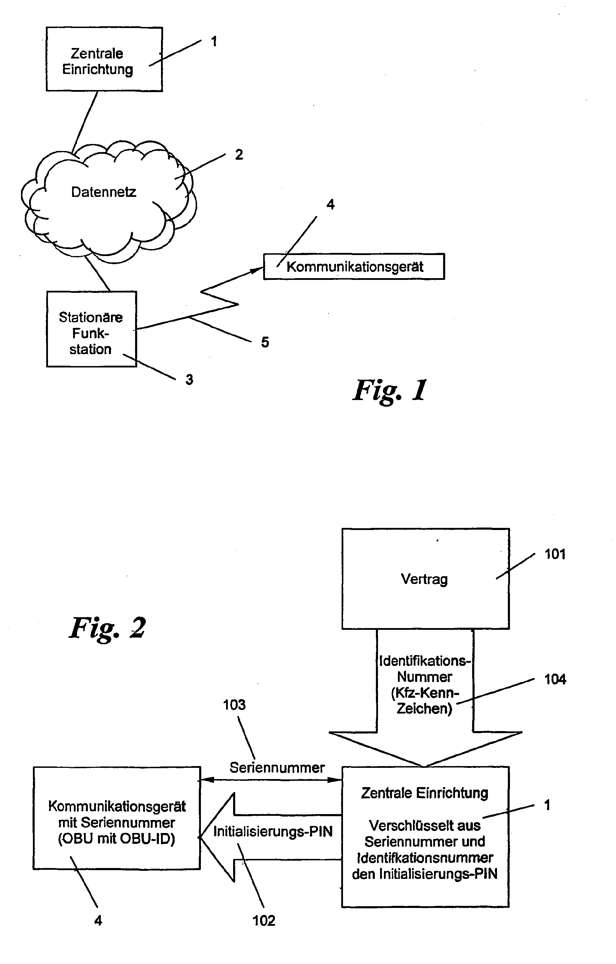

In Fig. 1 ist die schematische Garstellung des Systems gezeigt. In diesem Ausführungsbeispiel wird auf ein Straßenmautsystem näher eingegangen. Die Erfindung ist aber nicht nur auf diese Systeme beschränkt, sondern kann für alle Kommunikationssysteme eingesetzt werden, in denen dezentrale Geräte von einer Zentrale entweder automatisch oder manuell initialisiert werden und dabei eine eindeutige Benutzeridentifikation (z.B. in diesem Ausführungsbeispiel das Kfz-Kennzeichen) mit einer Zuordnung zu einer Geräteidentifikation (z.B. Seriennummer) eines dezentralen Identifikationsgeräts erfolgt.

Die Anlage gemäß Fig. 1 besteht aus einer zentralen Einrichtung 1 zum Sammeln der Daten der Identifikationsgeräte 4 und zur Vorverarbeitung und Weiterleitung zu einem nicht gezeigten Verrechnungszentrum. Die zentrale Einrichtung ist über ein öffentliches Datennetzwerk 2 mit regional angeordneten stationären Funkstationen 3 verbunden. Die Funkstationen 3 können Baken zur Mikrowellen- oder DSRC-Kommunikation mit den Identifikationsgeräten 4 sein, Basisstationen eines Mobilfunknetzwerkes oder Zugangsknoten eines WLAN oder einer WiMAX-Internetanbindung. Auch eine Kombination dieser Technologien zur bidirektionalen Datenübertragung zwischen Identifikationsgeräten 4 und stationären Funkstationen 3 ist möglich.

Die Identifikationsgeräte werden an Verteillager ausgeliefert. Bei Bedarf schließt ein Benutzer (z.B. ein Frächter) einen Vertrag 101 (Fig. 2) mit einem Betreiber der zentralen Einrichtung (z.B. ein Straßenmautbetreiber) ab, und es wird ihm ein Identifikationsgerät 4 mit einer einmaligen Geräteidentifikation 103 zugeordnet. Gleichzeitig werden diese und die Benutzeridentifikation 104 (z.B. das Kfz-Kennzeichen des Fahrzeuges) über einen in Fig. 1 nicht dargestellten Kommunikationsweg der zentralen Einrichtung 1 übermittelt. Die zentrale Einrichtung 1 generiert aus der Geräteidentifikation 103 und der Benutzeridentifikation 104 einen Initialisierungs-PIN 102, in dem die beiden Identifikationen und optional weitere Berechtigungen enthalten sind. Solche Berechtigungen können in diesem Anwendungsbeispiel neben anderen die Umweltklasse des Fahrzeuges oder auch die Anzahl seiner Achsen sein.

Der Initialisierungs-PIN wird dem Benutzer übermittelt, z.B. über ein Datennetz oder durch ein Telephonat, und von diesem in das Identifikationsgerät 4 eingegeben. Alternativ kann der Initialisierungs-PIN direkt von der zentralen Einrichtung 1 an das Identifikationsgerät gesendet werden.

Bei Übereinstimmung der eigenen Geräteidentifikation des Identifikationsgerätes mit der im Initialisierungs-PIN übermittelten Geräteidentifikation wird das Identifikationsgerät benutzerspezifisch initialisiert bzw. personalisiert und damit für den vorgesehenen Betrieb freigeschaltet. Während des Betriebs sammelt das Identifikationsgerät Daten, z.B. Fahrtstrekken, und übermittelt diese über die Funkschnittstelle 5, eine stationäre Funkstation 3 und das Datennetz 2 an die zentrale Einrichtung zur weiteren Auswertung.

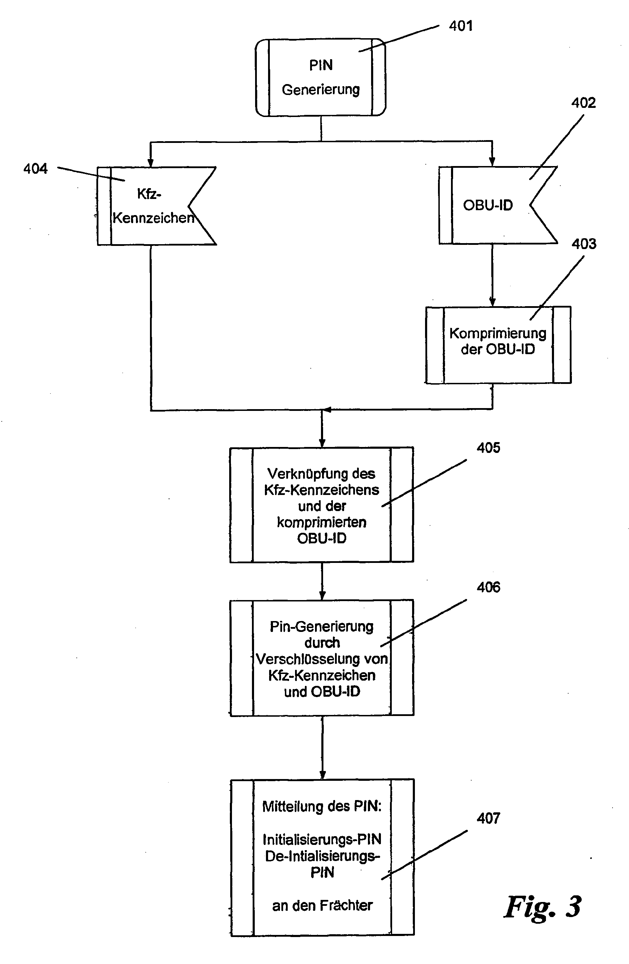

In Fig. 3 wird anhand des Anwendungsbeispiels der Straßenmaut auf die Generierung des Initialisierungs-PINs 401 eingegangen. Die OBU-ID 402 entspricht der Geräteidentifikation des Identifikationsgerätes und in der in Fig. 3 nicht weiter dargestellten Ausführung kann die Geräteidentifikation 103 aus einem öffentlichen Teil und einem privaten Teil bestehen. Der öffentliche Teil der Geräteidentifikation wird bei der Fertigung des Identifikationsgerätes festgelegt und z.B. sowohl auf das Gehäuse des Identifikationsgerätes gedruckt als auch im Identifikationsgerät gespeichert. Der private Teil der Geräteidentifikation 402 wird ebenfalls bei der Fertigung festgelegt und im Identifikationsgerät gespeichert. Der private Teil der Geräteidentifikation kann eine Zufallszahl oder eine nach einem bestimmten Algorithmus berechnete Zahl sein. Der öffentliche und der private Teil der Geräteidentifikation werden an die zentrale Einrichtung 1 vor Auslieferung des Identifikationsgerätes bekannt gegeben. In diesem Ausführungsbeispiel wird bei einem Vertragsabschluß, d.h. der Zuordnung eines Benutzer mit seiner Benutzeridentifikation zu einem Identifikationsgerät mit einer Geräteidentifikation, nur der öffentliche Teil der Geräteidentifikation an die zentrale Einrichtung 1 weitergegeben und diese ergänzt den privaten Teil der Geräteidentifikation zur Berechnung des Initialisierungs-PINs.

In einer weiteren Variante kann die Geräteidentifikation zur Vereinfachung der weiteren Schritte komprimiert werden (403).

Bei der Generierung des Initialisierungs-PINs werden das Kfz-Kennzeichen 404, das in diesem Fall der Benutzeridentifikation entspricht, und die OBU-ID 403 miteinander verknüpft (405) und mittels eines Verschlüsselungsverfahrens 406 codiert. Zur Initialisierung des Identifikationsgerätes wird der Initialisierungs-PIN an den Benutzer (hier: Frächter) zur Eingabe in das Identifikationsgerät 407 übermittelt.

Nach dem gleichen Verfahren wird bei einer Vertragsauflösung ein Deinitialisierungs-PIN generiert, wobei der Schritt zur Übermittlung der Geräteidentifikation 103 des Identifikationsgeräts entfällt, da die Zuordnung der zentralen Einrichtung bereits bekannt ist. Die Deinitialisierung setzt im Identifikationsgerät alle vertrags- bzw. benutzerspezifischen Daten zurück, sodaß das Identifikationsgerät für eine neuerliche Initialisierung vorbereitet ist.

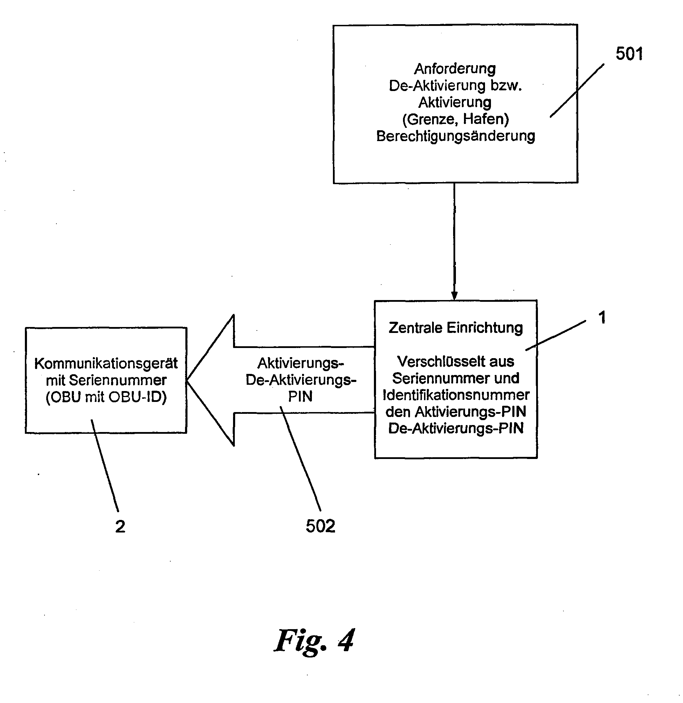

Für bestimmte Fälle ist es notwendig, daß das Identifikationsgerät deaktiviert wird, z.B. wenn das Fahrzeug aus dem mautpflichtigen Gebiet fährt und zu einem späteren Zeitpunkt bei der Rückkehr wieder aktiviert werden muß (siehe Fig. 4). Zu diesem Zwecke erfolgt eine Anforderung 501 an die zentrale Einrichtung 1, entweder automatisch über die Funkschnittstelle 5 und das Datennetz 2 bei der Ausfahrt aus dem mautpflichtigen Gebiet oder nach einer manuellen Anforderung, z.B. einem Telephonat mit dem Call-Center der zentralen Einrichtung 1. In jedem Fall wird von der zentralen Einrichtung ein Deaktivierungs-PIN 502 aus der Geräteidentifikation und Benutzeridentifikation erzeugt, wobei das gleiche Verfahren wie bei der Generierung des Initialisierungs-PINs Anwendung findet. Entweder wird der Deaktivierungs-PIN 502 automatisch über das Datennetz 2 und die Funkschnittstelle 3 an das Identifikationsgerät 4 gesendet und es erfolgt die automatische Deaktivierung der Identifikationsgeräts 4, oder bei der manuellen Anforderung wird dem Benutzer der Deaktivierungs-PIN 502 mitgeteilt und dieser gibt ihn in das Identifikationsgerät 4 ein, um die Deaktivierung des Identifikationsgeräts 4 durchzuführen.

Eine neuerliche Aktivierung des Identifikationsgerätes 4 erfolgt nach dem gleichen Verfahren wie die Deaktivierung nach Fig. 4 mittels eines Aktivierungs-PINs.

Die Änderung von Berechtigungen des Identifikationsgerätes erfolgt ebenfalls nach dem Verfahren der Deaktivierung des Identifikationsgerätes nach Fig. 4 mittels eines Berechtigungs-PINs.

Die verkehrstelematischen Daten werden über die Funkschnittstelle 3 und das Datennetz 2 an die zentrale Einrichtung 1 gesendet und es erfolgt von der zentralen Einrichtung 1 eine automatische Quittierung mittel eines Quittierungs-PINs. Sollte dieser ausbleiben, so ist es dem Benutzer möglich, den Quittierungs-PIN nach dem Verfahren nach Fig. 4 manuell anzufordern und nach dessen Erhalt die Quittierung durch Eingabe des Quittierungs-PINs manuell durchzuführen.

Die Erfindung ist selbstverständlich nicht auf das beispielhaft erörterte Einsatzgebiet der Straßenmautsysteme beschränkt, sondern auf beliebige Arten von Identifikationsgeräten anwendbar, welche zwecks einfacher Massenfertigung, Bevorratung und manipulationssicherer Distribution in einem nichtpersonalisierten Zustand ausgeliefert und vor Ort in einfacher, sicherer und transparenter Weise benutzerspezifisch initialisiert bzw. personalisiert werden sollen, um für Identifizierungs- oder Autorisierungszwecke Gültigkeit zu erlangen. Beispiele solcher weiterer Anwendungen sind die Personalisierung von elektronischen Fahrzeug- oder Benutzerausweisen oder von Smart-Cards oder RFID-Tags zu Identifikations- und Ausweiszwekken.

## Patentansprüche

1. Verfahren zur benutzerspezifischen Initialisierung von Identifikationsgeräten (4) im Feld, insbesondere Onboard-Units in Straßenmautsystemen, ausgehend von einer zentralen Einrichtung (1), wobei jedes Identifikationsgerät (4) im Auslieferzustand eine eindeutige Geräteidentifikation (103) hat, welcher in der zentralen Einrichtung (1) eine eindeutige Benutzeridentifikation (104) zugeordnet ist, **dadurch gekennzeichnet, daß** in der zentralen Einrichtung (1) aus der Geräteidentifikation (103) und der Benutzeridentifikation (104) ein Initialisierungs-PIN (102) generiert und an das Identifikationsgerät (4) übermittelt wird, aus welchem das Identifikationsgerät (4) anhand seiner Geräteidentifikation (103) die Benutzeridentifikation (104) zur benutzerspezifischen Initialisierung errechnet.

2. Verfahren nach Anspruch 1, **dadurch gekennzeichnet, daß** das Identifikationsgerät (4) die errechnete Benutzeridentifikation (104) anzeigt und/oder auf Anforderung sendet.

3. Verfahren nach Anspruch 1 oder 2, **dadurch gekennzeichnet, daß** die Geräteidentifikation (103) des Identifikationsgeräts aus einem öffentlichen und aus einem privaten Teil besteht.

4. Verfahren nach Anspruch 3, **dadurch gekennzeichnet, daß** der private Teil der Geräteidentifikation aus einer Zufallszahl oder durch einen Algorithmus gebildet wird.

5. Verfahren nach einem der Ansprüche 1 bis 4, **dadurch gekennzeichnet, daß** die zentrale Einrichtung ferner einen Deinitialisierungs-PIN zum Zurücksetzen der Initialisierung des Identifikationsgeräts (4) generiert.

6. Verfahren nach einem der Ansprüche 1 bis 5, **dadurch gekennzeichnet, daß** zur gültigen Initialisierung des Identifikationsgerätes (4) die mit dem Initialisierungs-PIN (102) übermittelte Geräteidentifikation mit der Geräteidentifikation (103) des Identifikationsgerätes (4) verglichen wird.

7. Verfahren nach einem der Ansprüche 1 bis 6, **dadurch gekennzeichnet, daß** der Initialisierungs-PIN (102) auch funktionale Berechtigungen und Daten des Identifikationsgerätes (4) umfaßt.

8. Verfahren nach einem der Ansprüche 1 bis 7, **dadurch gekennzeichnet, daß** zur Generierung des Initialisierungs-PIN und des allfälligen Deinitialisierungs-PINs ein Verschlüsselungsverfahren (406) angewendet wird und der Initialisierungs-PIN (102) und der allfällige Deinitialisierungs-PIN im Identifikationsgerät (4) entschlüsselt werden.

9. Verfahren nach einem der Ansprüche 1 bis 8 in Verbindung mit Anspruch 5, **dadurch gekennzeichnet, daß** das Identifikationsgerät (4) nach der Initialisierung vor einer neuerlichen Initialisierung deinitialisiert werden muß.

10. Verfahren nach einem der Ansprüche 1 bis 9, **dadurch gekennzeichnet, daß** der Initialisierungs-PIN (102) bzw. der allfällige Deinitialisierungs-PIN am Identifikationsgerät (4) manuell eingegeben oder über eine Funkschnittstelle (5) übertragen werden.

11. Verfahren nach einem der Ansprüche 1 bis 10, **dadurch gekennzeichnet, daß** das Identifikationsgerät (4) ein Fahrzeuggerät eines Verkehrstelematiksystems ist.

12. Verfahren nach Anspruch 11, **dadurch gekennzeichnet, daß** das Fahrzeuggerät eine Onboard-Unit und das Verkehrstelematiksystem ein Straßenmautsystem ist.

13. Verfahren nach einem der Ansprüche 1 bis 12, **dadurch gekennzeichnet, daß** die Funkverbindung (5) zwischen Identifikationsgerät (4) und zentraler Einrichtung (1) zumindest abschnittsweise eine Mikrowellen-Funkstrecke ist.

14. Verfahren nach einem der Ansprüche 1 bis 12, **dadurch gekennzeichnet, daß** die Funkverbindung (5) zwischen Identifikationsgerät (4) und zentraler Einrichtung (1) zumindest abschnittsweise eine DSRC-Funkstrecke ist.

15. Verfahren nach einem der Ansprüche 1 bis 12, **dadurch**
**gekennzeichnet, daß** die Funkverbindung (5) zwischen Identifikationsgerät (4) und zentraler Einrichtung (1) zumindest abschnittsweise ein Mobilfunksystem, z.B. GSM, UMTS, ist.

16. Verfahren nach einem der Ansprüche 1 bis 12, **dadurch gekennzeichnet, daß** die Funkverbindung (5) zwischen Identifikationsgerät (4) und zentraler Einrichtung (1) zumindest abschnittsweise eine Wireless-Datenverbindung, z.B. WLAN, WiMAX, ist.

17. Verfahren nach einem der Ansprüche 1 bis 16, **dadurch gekennzeichnet, daß** die zentrale Einrichtung (1) auf Anforderung für das initialisierte Identifikationsgerät (4) auch einen Aktivierungs- bzw. Deaktivierungs-PIN (502) generiert.

18. Verfahren nach einem der Ansprüche 1 bis 17, **dadurch gekennzeichnet, daß** die zentrale Einrichtung auf Anforderung für das initialisierte Identifikationsgerät (4) einen Berechtigungs-PIN zur Änderung der Berechtigungen und der Daten des Identifikationsgerätes (4) generiert.

19. Verfahren nach einem der Ansprüche 1 bis 18, **dadurch gekennzeichnet, daß** für die vom Identifikationsgerät (4) an die zentrale Einrichtung (1) übertragenen Daten ein Quittierungs-PIN zurückgesendet wird.

20. Anlage zur benutzerspezifischen Initialisierung von Identifikationsgeräten (4) im Feld, insbesondere Onboard-Units in Straßenmautsystemen, mit
zumindest einem Identifikationsgerät (4), das eine eindeutige Geräteidentifikation (103) im Auslieferzustand, einen Speicher zur Aufnahme einer Benutzeridentifikation (104) im initialisierten Zustand, und eine Anzeige und/oder Sendeeinrichtung für letztere umfaßt,
**dadurch gekennzeichnet,**
**daß** die Anlage eine zentrale Einrichtung (1) mit einer Einrichtung zur Generierung von Initialisierungs-PINs (102) aus jeweils einem Paar einer Geräteidentifikation (103) und einer zugeordneten Benutzeridentifikation (104) und zur Übermittlung des generierten Initialisierungs-PINs (102) an ein Identifikationsgerät (4) aufweist,
wobei das Identifikationsgerät (4) aus dem übermittelten Initialisierungs-PIN (102) anhand seiner Geräteidentifikation (103) die Benutzeridentifikation (104) errechnet und speichert und auf Anforderung hin anzeigt und/oder sendet.

21. Anlage nach Anspruch 20, **dadurch gekennzeichnet, daß** das Identifikationsgerät (4) eine Eingabevorrichtung zur Eingabe des Initialisierungs-PINs (102) und bevorzugt weiterer Deinitialisierungs-PINs, Aktivierungs-PINs (502), Deaktivierungs-PINs (502), Berechtigungs-PINs und/oder Quittierungs-PINs aufweist.

22. Anlage nach einem der Ansprüche 20 oder 21, **dadurch gekennzeichnet, daß** die zentrale Einrichtung (1) eine Verschlüsselungseinrichtung (406) zur Verschlüsselung des Initialisierungs-PINs und bevorzugt weiterer Deinitialisierungs-PINs, Aktivierungs-PINs, Deaktivierungs-PINs, Berechtigungs-PINs und/oder Quittierungs-PINs und das Identifikationsgerät (4) eine Entschlüsselungseinrichtung zum entsprechenden Entschlüsseln aufweist.

23. Anlage nach einem der Ansprüche 20 bis 22, **dadurch gekennzeichnet, daß** das Identifikationsgerät (4) ein Fahrzeuggerät eines Verkehrstelematiksystems ist.

24. Anlage nach Anspruch 23, **dadurch gekennzeichnet, daß** das Verkehrstelematiksystem ein Straßenmautsystem ist.

25. Anlage nach einem der Ansprüche 20 bis 24, **dadurch gekennzeichnet, daß** die Funkverbindung (5) zwischen Identifikationsgerät (4) und zentraler Einrichtung (1) zumindest abschnittsweise eine Mikrowellen-Funkstrecke ist.

26. Anlage nach einem der Ansprüche 20 bis 24, **dadurch gekennzeichnet, daß** die Funkverbindung (5) zwischen Identifikationsgerät (4) und zentraler Einrichtung (1) zumindest abschnittsweise eine DSRC-Funkstrecke ist.

27. Anlage nach einem der Ansprüche 20 bis 24, **dadurch gekennzeichnet, daß** die Funkverbindung (5) zwischen Identifikationsgerät (4) und zentraler Einrichtung (1) zumindest abschnittsweize eine Mobilfunksystem, z.B. GSM, UMTS, ist.

28. Anlage nach einem der Ansprüche 20 bis 24, **dadurch gekennzeichnet, daß** die Funkverbindung (5) zwischen Identifikationsgerät (4) und zentraler Einrichtung (1) zumindest abschnittsweise eine Wireless-Datenverbindung, z.B. WLAN, WiMAX, ist.

## Claims

1. Method for the user-specific, in situ initialisation of identification devices (4), in particular onboard units in road toll systems, from a central facility (1), each identification device (4) having a unique device identifier (103) in the shipped state, to which is assigned a unique user identifier (104) in the central facility (1), **characterised in that**, on the basis of the device identifier (103) and the user identifier (104), an initialisation PIN (102) is generated in the central facility (1) and transferred to the identification device (4), from which initialisation PIN (102) the identification device (4), with reference to the device identifier (103) thereof, calculates the user identifier (104) for user-specific initialisation.

2. Method according to claim 1, **characterised in that** the identification device (4) displays the calculated user identifier (104) and/or transmits it on request.

3. Method according to claim 1 or claim 2, **characterised in that** the device identifier (103) of the identification device consists of a public part and a private part.

4. Method according to claim 3, **characterised in that** the private part of the device identifier is formed of a random number or by an algorithm.

5. Method according to any one of claims 1 to 4, **characterised in that** the central facility further generates a deinitialisation PIN for resetting the initialisation of the identification device (4).

6. Method according to any one of claims 1 to 5, **characterised in that**, for valid initialisation of the identification device (4), the device identifier transferred with the initialisation PIN (102) is compared with the device identifier (103) of the identification device (4).

7. Method according to any one of claims 1 to 6, **characterised in that** the initialisation PIN (102) also comprises functional class-of-service data and information of the identification device (4).

8. Method according to any one of claims 1 to 7, **characterised in that** an encryption method (406) is used to generate the initialisation PIN and any possible deinitialisation PIN and the initialisation PIN (102) and any possible deinitialisation PIN are decrypted in the identification device (4).

9. Method according to any one of claims 1 to 8 in conjunction with claim 5, **characterised in that**, after initialisation, the identification device (4) must be deinitialised before renewed initialisation.

10. Method according to any one of claims 1 to 9, **characterised in that** the initialisation PIN (102) or any possible deinitialisation PIN are manually input into the identification device (4) or transmitted via a radio interface (5).

11. Method according to any one of claims 1 to 10, **characterised in that** the identification device (4) is a vehicle device of a traffic telematics system.

12. Method according to claim 11, **characterised in that** the vehicle device is an onboard unit and the traffic telematics system is a road toll system.

13. Method according to any one of claims 1 to 12, **characterised in that** the radio link (5) between the identification device (4) and central facility (1) is at least in part a microwave radio link.

14. Method according to any one of claims 1 to 12, **characterised in that** the radio link (5) between the identification device (4) and central facility (1) is at least in part a DSRC radio link.

15. Method according to any one of claims 1 to 12, **characterised in that** the radio link (5) between the identification device (4) and central facility (1) is at least in part a mobile radio system, for example GSM, UMTS.

16. Method according to any one of claims 1 to 12, **characterised in that** the radio link (5) between the identification device (4) and central facility (1) is at least in part a wireless data link, for example WLAN, WiMAX.

17. Method according to any one of claims 1 to 16, **characterised in that** the central facility (1) also generates, on request, an activation or deactivation PIN (502) for the initialised identification device (4).

18. Method according to any one of claims 1 to 17, **characterised in that** the central facility generates, on request, a class-of-service PIN for the initialised identification device (4), for changing the class-of-service data and information of the identification device (4).

19. Method according to any one of claims 1 to 18, **characterised in that** a confirmation PIN is returned for the data transmitted from the identification device (4) to the central facility (1).

20. System for the user-specific, in situ initialisation of identification devices (4), in particular onboard units in road toll systems, with
at least one identification device (4) comprising a unique device identifier (103) in the shipped state, a memory for accommodating a user identifier (104) in the initialised state, and a display and/or transmitter for the latter, **characterized in that**
the systems comprises a central facility (1) with a facility for generating initialisation PINs (102) from in each case a pair comprising a device identifier (103) and an assigned user identifier (104) and for transferring the generated initialisation PIN (102) to an identification device (4),
wherein the identification device (4) calculates and stores the user identifier (104) from the transferred initialisation PIN (102) with reference to its device identifier (103) and, on request, displays and/or transmits it.

21. System according to claim 20, **characterised in that** the identification device (4) comprises an input device for inputting the initialisation PIN (102) and preferably further deinitialisation PINs, activation PINs (502), deactivation PINs (502), class-of-service PINs and/or confirmation PINs.

22. System according to either one of claims 20 or 21, **characterised in that** the central facility (1) comprises an encryption facility (406) for encrypting the initialisation PIN and preferably further deinitialisation PINs, activation PINs, deactivation PINs, class-of-service PINs and/or confirmation PINs and the identification device (4) comprises a decryption facility for the corresponding decryption.

23. System according to any one of claims 20 to 22, **characterised in that** the identification device (4) is a vehicle device of a traffic telematics system.

24. System according to claim 23, **characterised in that** the traffic telematics system is a road toll system.

25. System according to any one of claims 20 to 24, **characterised in that** the radio link (5) between the identification device (4) and central facility (1) is at least in part a microwave radio link.

26. System according to any one of claims 20 to 24, **characterised in that** the radio link (5) between the identification device (4) and central facility (1) is at least in part a DSRC radio link.

27. System according to any one of claims 20 to 24, **characterised in that** the radio link (5) between the identification device (4) and central facility (1) is at least in part a mobile radio system, for example GSM, UMTS.

28. System according to any one of claims 20 to 24, **characterised in that** the radio link (5) between the identification device (4) and central facility (1) is at least in part a wireless data link, for example WLAN, WiMAX.

## Revendications

1. Procédé d'initialisation propre à l'utilisateur de dispositifs d'identification (4) sur place, en particulier d'unités embarquées dans des systèmes de péage routier, à partir d'un dispositif central (1), chaque dispositif d'identification (4) ayant dans l'état de livraison une identification d'appareil univoque (103) à laquelle une identification d'utilisateur univoque (104) a été attribuée dans le dispositif central (1), **caractérisé en ce qu'**un numéro d'identification personnel (PIN) d'initialisation (102) est généré dans le dispositif central (1) à partir de l'identification d'appareil (103) et de l'identification d'utilisateur (104) et est communiqué au dispositif d'identification (4), le dispositif d'identification (4) calculant, à partir dudit PIN d'initialisation et à l'aide de son identification d'appareil (103), l'identification d'utilisateur (104) en vue de l'initialisation propre à l'utilisateur.

2. Procédé selon la revendication 1, **caractérisé en ce que** le dispositif d'identification (4) affiche l'identification d'utilisateur (104) calculée et/ou l'envoie sur demande.

3. Procédé selon la revendication 1 ou 2, **caractérisé en ce que** l'identification d'appareil (103) du dispositif d'identification se compose d'une partie publique et d'une partie privée.

4. Procédé selon la revendication 3, **caractérisé en ce que** la partie privée de l'identification d'appareil est formée à partir d'un nombre aléatoire ou par le biais d'un algorithme.

5. Procédé selon l'une quelconque des revendications 1 à 4, **caractérisé en ce que** le dispositif central génère un PIN de désinitialisation permettant de restaurer l'initialisation du dispositif d'identification (4).

6. Procédé selon l'une quelconque des revendications 1 à 5, **caractérisé en ce que**, pour l'initialisation valide du dispositif d'identification (4), l'identification d'appareil communiquée avec le PIN d'initialisation (102) est comparée à l'identification d'appareil (103) du dispositif d'identification (4).

7. Procédé selon l'une quelconque des revendications 1 à 6, **caractérisé en ce que** le PIN d'initialisation (102) comprend également des autorisations et données fonctionnelles du dispositif d'identification (4).

8. Procédé selon l'une quelconque des revendications 1 à 7, **caractérisé en ce que** l'on emploie un procédé de chiffrement (406) pour la génération du PIN d'initialisation et de l'éventuel PIN de désinitialisation et le PIN d'initialisation (102) et l'éventuel PIN de désinitialisation sont déchiffrés dans le dispositif d'identification (4).

9. Procédé selon l'une quelconque des revendications 1 à 8 en conjonction avec la revendication 5, **caractérisé en ce que**, après l'initialisation, le dispositif d'identification (4) doit être désinitialisé avant une nouvelle initialisation.

10. Procédé selon l'une quelconque des revendications 1 à 9, **caractérisé en ce que** le PIN d'initialisation (102), respectivement l'éventuel PIN de désinitialisation, sont entrés manuellement dans le dispositif d'identification (4) ou sont transmis par le biais d'une interface radioélectrique (5).

11. Procédé selon l'une quelconque des revendications 1 à 10, **caractérisé en ce que** le dispositif d'identification (4) est un appareil pour véhicule d'un système télématique de circulation routière.

12. Procédé selon la revendication 11, **caractérisé en ce que** l'appareil de véhicule est une unité embarquée et que le système télématique de circulation routière est un système de péage routier.

13. Procédé selon l'une quelconque des revendications 1 à 12, **caractérisé en ce que** la liaison radioélectrique (5) entre le dispositif d'identification (4) et le dispositif central (1) est au moins par sections une liaison radioélectrique à hyperfréquences.

14. Procédé selon l'une quelconque des revendications 1 à 12, **caractérisé en ce que** la liaison radioélectrique (5) entre le dispositif d'identification (4) et le dispositif central (1) est au moins par sections une liaison radioélectrique DSRC.

15. Procédé selon l'une quelconque des revendications 1 à 12, **caractérisé en ce que** la liaison radioélectrique (5) entre le dispositif d'identification (4) et le dispositif central (1) est au moins par sections un système de radiocommunication mobile, par exemple GSM, UMTS.

16. Procédé selon l'une quelconque des revendications 1 à 12, **caractérisé en ce que** la liaison radioélectrique (5) entre le dispositif d'identification (4) et le dispositif central (1) est au moins par sections une liaison de données sans fil, par exemple WLAN, WiMAX.

17. Procédé selon l'une quelconque des revendications 1 à 16, **caractérisé en ce que** le dispositif central (1) génère sur demande également un PIN d'activation, respectivement de désactivation (502), pour le dispositif d'identification (4) initialisé.

18. Procédé selon l'une quelconque des revendications 1 à 17, **caractérisé en ce que** le dispositif central génère sur demande un PIN d'autorisation pour le dispositif d'identification (4) initialisé en vue de modifier les autorisations et les données du dispositif d'identification (4).

19. Procédé selon l'une quelconque des revendications 1 à 18, **caractérisé en ce qu'**un PIN d'accusé-réception est renvoyé pour les données que le dispositif d'identification (4) a transmises au dispositif central (1).

20. Installation d'initialisation propre à l'utilisateur de dispositifs d'identification (4) sur place, en particulier d'unités embarquées dans des systèmes de péage routier, comportant
au moins un dispositif d'identification (4), qui comprend une identification d'appareil (103) univoque dans l'état de livraison, une mémoire pour recevoir une identification d'utilisateur (104) à l'état initialisé et un affichage et/ou un dispositif d'émission pour ces derniers,
**caractérisé en ce que**,
l'installation comporte un dispositif central (1) équipé d'un dispositif servant à générer des PIN d'initialisation (102) à partir respectivement d'une paire formée par une identification d'appareil (103) et une identification d'utilisateur (104) attribuée, et servant à communiquer le PIN d'initialisation (102) généré à un dispositif d'identification (4),
le dispositif d'identification (4) calculant à partir du PIN d'initialisation (102) communiqué et à l'aide de son identification d'appareil (103) l'identification d'utilisateur (104), l'enregistrant, et l'affichant et/ou l'envoyant sur demande.

21. Installation selon la revendication 20, **caractérisé en ce que** le dispositif d'identification (4) comporte un dispositif d'entrée permettant d'entrer le PIN d'initialisation (102) et de préférence également des PIN de désinitialisation, des PIN d'activation (502), des PIN de désactivation (502), des PIN d'autorisation et/ou des PIN d'accusé-réception.

22. Installation selon l'une quelconque des revendications 20 ou 21, **caractérisé en ce que** le dispositif central (1) comporte un dispositif de chiffrement (406) servant à chiffrer le PIN d'initialisation et de préférence également des PIN de désinitialisation, des PIN d'activation, des PIN de désactivation, des PIN d'autorisation et/ou des PIN d'accusé-réception, et **en ce que** le dispositif d'identification (4) comporte un dispositif de déchiffrement servant au déchiffrement correspondant.

23. Installation selon l'une quelconque des revendications 20 à 22, **caractérisé en ce que** le dispositif d'identification (4) est un appareil pour véhicule d'un système télématique de circulation routière.

24. Installation selon la revendication 23, **caractérisé en ce que** le système télématique de circulation routière est un système de péage routier.

25. Installation selon l'une quelconque des revendications 20 à 24, **caractérisé en ce que** la liaison radioélectrique (5) entre le dispositif d'identification (4) et le dispositif central (1) est au moins par sections une liaison radioélectrique à hyperfréquences.

26. Installation selon l'une quelconque des revendications 20 à 24, **caractérisé en ce que** la liaison radioélectrique (5) entre le dispositif d'identification (4) et le dispositif central (1) est au moins par sections une liaison radioélectrique DSRC.

27. Installation selon l'une quelconque des revendications 20 à 24, **caractérisé en ce que** la liaison radioélectrique (5) entre le dispositif d'identification (4) et le dispositif central (1) est au moins par sections un système de radiocommunication mobile, par exemple GSM, UMTS.

28. Installation selon l'une quelconque des revendications 20 à 24, **caractérisé en ce que** la liaison radioélectrique (5) entre le dispositif d'identification (4) et le dispositif central (1) est au moins par sections une liaison de données sans fil, par exemple WLAN, WiMAX.
